# EUROPEAN PATENT SPECIFICATION

(11) **EP 2 928 800 B1**
(45) Date of publication and mention of the grant of the patent: **26.07.2017**
(21) Application number: 13799305.1
(22) Date of filing: 04.12.2013
(51) Int. Cl.: B65G 69/08, B65G 53/22, A23C 9/15, A23L 2/40

(54) **APPARATUS AND METHOD FOR TRANSFERRING AND PRESSURIZING POWDER**
VORRICHTUNG UND VERFAHREN ZUR ÜBERTRAGUNG UND DRUCKBEAUFSCHLAGUNG VON PULVER
APPAREIL ET PROCÉDÉ DE TRANSFERT ET DE PRESSURISATION DE POUDRE

(30) Priority: 04.12.2012 EP 12195457
(43) Date of publication of application: 14.10.2015
(73) Proprietor: Nestec S.A., 1800 Vevey (CH)
(72) Inventor: BEGON, Xavier, CH-1005 Lausanne (CH); DUFFEY, Jean-Louis, F-74500 Lugrin (FR); WARNERY, Philippe François, Singapore 278698 (SG); BOURGEOIS, Christian, CH-1470 Lully (CH)
(74) Representative: Krishnan, Sri
(86) International application number: PCT/EP2013/075451
(87) International publication number: WO 2014/086811

(56) References cited:
- WO-A1-01/75342
- WO-A1-2012/068012
- GB-A- 1 413 350
- JP-A- S5 969 316
- US-B2- 7 234 493

## Description

### FIELD OF THE INVENTION

The present invention relates to an apparatus for transferring a powdered material from a first zone under pressure P1 to a second zone under pressure P2 and for pressurizing the powdered material from pressure P1 to pressure P2. The present invention may impart movement, such as oscillations, to the powdered material typically to avoid packing of the powdered material during transfer.

### BACKGROUND OF THE INVENTION

Processing of powdered material in a production line often involves the powder being transported between different zones with different thermo dynamical properties, say transported from a first zone with pressure P1 to a second zone with pressure P2.

An example of processing powder is disclosed in EP 1 206 193 pertaining to production of a foaming ingredient and powders containing it.

US 7,234,493 discloses a device for transferring a dusty, powdery, grain-like or granular conveyed material out of a storage receptacle and into a working or transfer receptacle or similar accommodating space. The device comprises a working chamber, which is connected to a supply line for the conveyed material and comprises a discharge cross-section. At least one feed line for a flow of medium leads into the working chamber and a filter device is located between the flow medium and the conveyed material. The supply line for the conveyed material leads into a tubular filter space, and a filter insert, which is also tubular and delimits said filter space, is placed inside the working chamber connected to an air line and/or to a gas line.

This document does not provide for pressurizing a powdered material from a first pressure to a second pressure. However, powdered material transferred by use of a flow medium has a tendency to pack and such packing leads to clogging of devices for transferring powdered material from a first zone at pressure P1 to a second zone at pressure P2 which clogging will effectively prevent any further transfer. The clogging effect has turned out to be amplified with increasing difference in pressure.

Document GB 1,413,350 discloses an apparatus for transferring a powdered material according to the preamble of claim 1.

Hence, an improved apparatus and method for transferring powdered material would be advantageous, and in particular a more efficient and/or reliable apparatus and method would be advantageous.

Accordingly, it may be seen as an object of the present invention to provide an apparatus and a method that solves the above mentioned problem of the prior art.

### SUMMARY OF THE INVENTION

Thus, the above described object and several other objects are intended to be obtained in a first aspect of the invention by providing an apparatus for transferring a powdered material from a first zone under first pressure P1 to a second zone under second pressure P2, and for pressurizing the powdered material from pressure P1 to pressure P2, as stated in the appended claim 1. One of the effects obtained by the invention is that a loosening action on the powdered material is provided which may outbalance powdered material's tendency to pack into a solid like structure. In addition, the infeed of gas may provide a further loosening action on the powdered material, typically by imparting a fluidization of the powdered material in the apparatus.

The oscillator is arranged internally in the apparatus and proximal to the powder outlet. Thereby the oscillator is in direct contact with the powdered material and accordingly act directly upon the powdered material. It is noted that transfer of the powdered material is at least assisted by a flow of fluid, preferably being a gas, which flow of fluid carries with it the powdered material. Accordingly, the features powder inlet and powder outlet refer to inlet and outlet for a mixture of gas and powdered material. According to the invention the oscillator comprises a rotatable flap arranged in the receptacle and extending perpendicular to the direction of powder discharge. The rotatable flap is positioned in an ajar position, and the rotatable flap is actuated to oscillate around its ajar position during powder discharge.

Preferably and advantageously, the rotatable flap is actuated by an actuator without hysteresis. The actuator may preferably comprise a pneumatic actuator. In particular preferred embodiments of the present invention, the oscillator may comprise butterfly valve.

The receptacle may preferably be equipped with at least two gas inlets, at least one of which is positioned between the oscillator and the powder outlet.

Furthermore, the receptacle may preferably be equipped with a filter capable of retaining said powdered material and which delimits within the receptacle: a head space which is provided with the gas outlet, and a working space which is provided with the powder inlet and the powder outlet. In addition, the head space may preferably be provided with a gas inlet.

The receptacle may preferably be equipped with a plurality of gas inlets connected to a single gas supply through respective gas pipes. In addition, the gas pipes may preferably be arranged in parallel from the gas supply to the gas inlets. In addition or alternatively, the gas pipes may preferably be equipped with closure means, preferably being controllable shut-off valves. Preferably, the closure means of the gas pipes may be controlled for simultaneous opening or closing. The apparatus may preferably comprise a tapering member between the oscillator and the powder outlet.

Preferably, the oscillator may be adapted to oscillate with a frequency between 0.5 Hz and 30 Hz and may preferably be adapted oscillate with an amplitude between 1 degress and 20 degrees.

The apparatus according to the present invention operates with an absolute difference in pressure between the first pressure P1 and the second pressure P2, |P2-P1|, of at least 10 bar. The present invention relates also to a method of transferring a powdered material from a first zone under pressure P1 to a second zone under pressure P2. The method makes use of the apparatus according to the other aspects of the invention and comprises:
- filling the apparatus with powdered material from the first zone by feeding powdered material into the receptacle while the powder inlet being open, the powder outlet being closed, the gas outlet being opened and the gas inlet preferably being closed;
- pressurising the apparatus by feeding pressurised gas into the apparatus through one or more gas inlets while the powder inlet, the powder outlet and the gas outlet being closed;
- emptying the apparatus by opening the powder outlet, activating the oscillator and, preferably, allowing pressurised gas to flow into the apparatus through one or more gas inlets.
These and other aspects of the invention will be apparent from and elucidated with reference to the embodiments described hereinafter.

### BRIEF DESCRIPTION OF THE FIGURES

Preferred embodiments according to the invention will now be described in more detail with regard to the accompanying figures. The figures show ways of implementing the present invention and are not to be construed as being limiting to other possible embodiments falling within the scope of the attached claim set.
Figure 1 shows schematically a first embodiment of an apparatus for transferring a powdered material according to the present invention,
Figure 2 shows schematically an oscillator according to the present invention,

### DETAILED DESCRIPTION OF PREFERRED EMBODIMENTS OF THE INVENTION

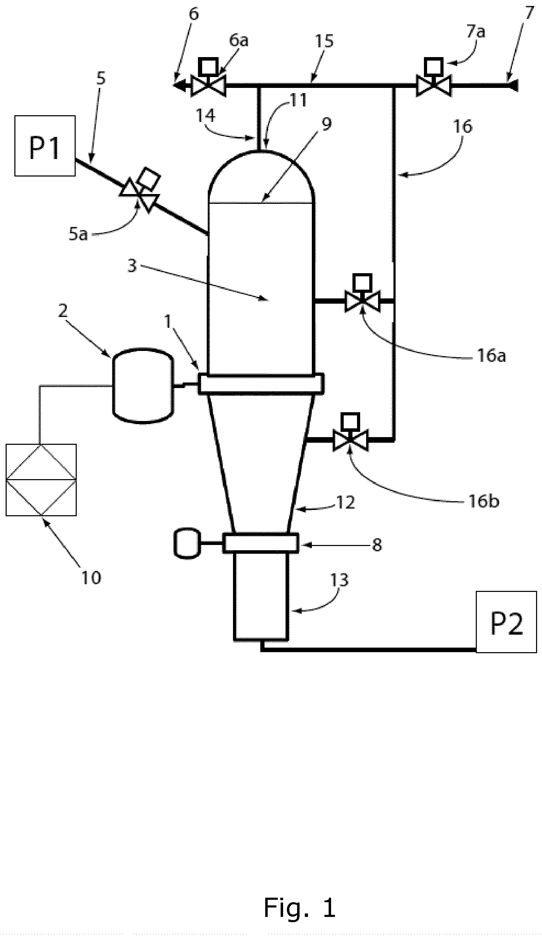

Fig. 1 shows schematically a first embodiment of an apparatus for transferring a powdered material according to the present invention. The apparatus is adapted to transfer powdered material from a first zone being under a first pressure P1 to a second zone being under a second pressure P2. The apparatus operates with an absolute difference in pressure between the first pressure P1 and the second pressure P2 of at least 10 bar, even more preferably of at least 50 bar. The transfer of powdered material out of the apparatus is at least partly obtained by the powdered material being carried with a fluid, preferably being a pressurised gas flowing out the apparatus towards the downstream positioned second zone. Similarly, the powdered material is preferably fed into the apparatus by being carried with a fluid, preferably being pressurised gas, flowing from the first zone and into the apparatus.

The apparatus comprises a receptacle 3 being shaped as a cylinder. At the upper end (with reference to the figure) of the receptacle 3, a hemispherical member 11 is arranged and at the lower end a tapering member 12 is arranged. At the narrow end of the tapering member 12 a pipe member 13 is arranged.

Inside the apparatus a filter 9 is arranged in the region of the hemispherical member 11. The filter is preferably arranged at the upper end of the receptacle 3 and the hemispherical member 11 thereby form a headspace and the receptacle 3 with tapering member 12 forms a working space which is provided with the powder inlet 5 and the powder outlet in form of the pipe member 13.

The apparatus is connected to a number of sources through pipes and valve, where the valves with connections to pipes may be an integral part of the apparatus. As shown in the figure, the various valves are typically controllable shut-off valves and the valves are typically electrical or pneumatic controlled.

Powdered material enters into the apparatus from a first zone being under a first pressure P1 through a powder inlet 5 comprising a controllable shut-off valve 5a arranged in a pipe connection between the first zone and the interior of the receptacle 3. Powder leaves the apparatus through the pipe member 13, serving as powder outlet, being connected to a second zone being under a second pressure P2. The transfer of powdered material is effectuated by the powder being carried with a gas flow typically under influence of the gravity as well.

At the upper end of the apparatus (on the top of the hemispherical part 11) a selective connection to vacuum 6 and feed pressure 7 is provided. It should be noted that in the present context, the feature *vacuum* is used to mean suction (or at least providing a possibility to allow gas at a higher pressure to flow towards the vacuum) provided by providing a pressure being lower than the pressure in the receptacle 3 and that the feature *feed pressure* is used to mean fluid, preferably a gas, being at a higher pressure than the pressure inside the receptacle 3.

The connection to vacuum 6 and feed pressure 7 is provided by pipes including controllable shut-off valves 6a and 7a. As indicated in fig. 1, the headspace is accordingly connected to the feed pressure 7 via a pipe 14 extending from the top of the hemispherical member 11 to an intermediate pipe 15. At one end of the intermediate pipe 15, the valve 7a is arranged and at the other end of the intermediate pipe 14 the valve 6a is arranged. By this configuration, the pipe 14 may serve as a gas inlet and as a gas outlet depending on whether gas flows into or out of the apparatus through pipe 14.

An auxiliary connection may be provided by a pipe 16 extending from the intermediate pipe 15 via two controllable shut-off valves 16a and 16b for controlling flow of pressurised gas to the apparatus at two locations; the valve 16a controls flow of gas into the receptacle 3 and the valve 16b controls flow of gas into the tapering element 12. Accordingly, pipe 16 with controllable shut-off valves serves as gas inlet for the apparatus. It should be noted that one or both connections in which 16a and/or 16b forms part of may be omitted.

The apparatus further comprising a closure means in the form of controllable process valve 8 adapted to close the passage between the tapering element 12 and the pipe member 13. The process valve 8 is preferably in the form of a flap valve where the flap can be arranged in at least two positions: a horizontal position where the opening of the tapering member 12 is sealed and a vertical position not sealing the opening of the tapering member 12 The directions "horizontal" and "vertical" are given according to the orientation of the apparatus as shown in the figure where the flow of powdered material through the apparatus is vertical. The sealing provided is preferably sufficient to allow a pressurization of the apparatus to a pressure being at least equal the pressure in the second zone and in many embodiments the sealing and the flap is preferably adapted to withstand a pressure difference of at least 10 bar across the process valve 8.

In addition, an oscillator 1, which will be described in greater details below, is arranged in the passage between the cylindrical shaped receptacle 3 and the tapering element 12. The oscillator 1 is preferably pneumatic activated and controlled and is accordingly connected to an actuator 2 which is connected to a controller 10, typically comprising a computer.

It is noted that the piping shown in fig. 1 is only one example, where the pipes are connected in parallel to single source 7 and where the valves 7a, 16a and 16b may preferably be controlled to shift state (open/close) simultaneously or in other orders, of a number of various other ways of connecting and controlling the apparatus to feed pressure and vacuum.

The apparatus is preferably used in the following manner.

### Filling of the apparatus:

To introduce powder into the apparatus, the various valves are organised in the following manner:

| 7a | 16a | 16b | 8 | 5a | 6a |
|---|---|---|---|---|---|
| Closed | Closed | Closed | Closed | Open | Open |

The combination of the hemispherical member 11 being exposed to vacuum, the powder being at a pressure of P1 in the first zone and the valve 8 being closed results in powder flowing into the receptacle 3. Powder is prevented from leaving the receptacle 3 through connection at the hemispherical member by the filter 9.

### Pressurization of the apparatus

Once a desired amount of powder has been introduced into the apparatus, the various valves are organised in the following manner:

| 7a | 16a | 16b | 8 | 5a | 6a |
|---|---|---|---|---|---|
| Open | Open | Open | Closed | Closed | Closed |

During this stage, the pressurization of the apparatus is aimed at and pressurization is preferably performed by feeding pressurised gas from feed pressure 7. It is possible to obtain the pressurization with only one or more of the valves 7a, 16a and 16b in open state and an opening sequence for these valves may be selected in different ways than indicated in the above table. For instance, if the powder introduced has a high tendency to pack, it is preferred to open valves 16a and 16b as this may loosen up the powder e.g. by a fluidisation during pressurization.

### Emptying of the apparatus

Once a desired amount of powder has been introduced into the receptacle 3 and the apparatus has been pressurised, the various valves are organised in the following manner:

| 7a | 16a | 16b | 8 | 5a | 6a |
|---|---|---|---|---|---|
| Open | Open | Open | Open | Closed | Closed |

As indicated above, opening of the valve 8 awaits the build-up of pressure in the apparatus to a pressure inside the apparatus being equal to the pressure P2 in the second zone. Optionally, opening of the valve 8 may await build-up of a pressure being slightly higher (such as 1 bar) than the pressure P2.

Once the pressure in the apparatus is at the desired level and the valve 8 is open, the powder present in the apparatus may leave the receptacle 3 via the tapering member 12, the pipe member 13 and into a succeeding process line.

The procedure described above is adapted to increase the pressure of the powdered material from pressure P1 to pressure P2. It must be noted that the apparatus may also be used to decrease the pressure of the powdered material from pressure P2 to pressure P1. Filling of the apparatus is performed as above. It is followed by depressurization of the apparatus. Then, emptying of the apparatus is performed as above.

### Depressurization of the apparatus

Once a desired amount of powder has been introduced into the apparatus, the various valves are organised in the following manner:

| 7a | 16a | 16b | 8 | 5a | 6a |
|---|---|---|---|---|---|
| Closed | Closed | Closed | Closed | Closed | Open |

During this stage, the depressurization of the apparatus is aimed at and depressurization is preferably performed by applying suction from vacuum 6. Optionally, opening of the valve 6a may await build-up of a pressure being slightly lower (such as 1 bar) than the pressure P1.

Powder often has a tendency to pack into a solid like structure and in order to avoid such packing which could block the apparatus in e.g. the tapering member 12, in the pipe member 13 or even further downstream, an oscillator 1 is arranged to vibrate the powder in order to avoid packing typically by a loosen-up action such as a fluidization of the powder. In combination with the oscillation 1, the powder may be loosened-up by introduction of fluid, preferably gas, through valve 16a, 16b or both.

The apparatus is preferably arranged with its longitudinal direction being parallel to the orientation of the gravity (with reference to fig. 1, gravity is acting in a direction from the hemispherical member 11 towards the pipe member 13). Accordingly, gravity will at least assist in emptying the apparatus. By continuing feeding pressurised gas into the apparatus (valves 7a, 16a and 16b are open), the flow of gas will be towards the pipe element 13 and as the powder is loosened-up, the powder will be carried with gas flowing.

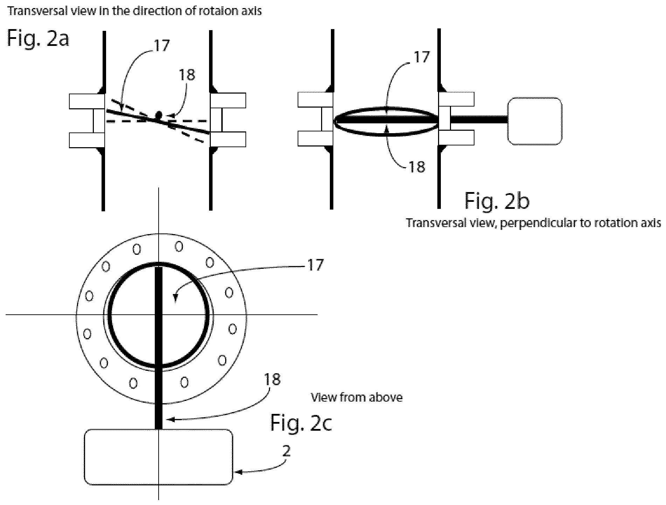

The oscillator 1 is shown in further details in fig. 2. Fig. 2a shows a cross sectional view of a section of the apparatus taken along the longitudinal direction of the apparatus and perpendicular to the plane of the figure. Fig. 2b shows a cross sectional view of a section of the apparatus taken along the longitudinal direction of the apparatus and parallel to the plane of the figure. Finally, fig. 2c shows a cross sectional view of the section of the apparatus perpendicular to the longitudinal direction of the apparatus.

As shown in fig. 2, the oscillator 1 comprises a butterfly valve having a rotatable flap 17 arranged on a shaft 18. The shaft 18 extends radially through the geometrical centre of receptacle 3 perpendicular to the discharge direction of the powder (the discharge direction is the longitudinal direction from the receptacle 3 and towards the process valve 8. In the embodiment shown in fig. 2, the shaft 18 is shown to be arranged above the flap 17 (with reference to the figure). However, the shaft 18 may be arranged below the flap 17. The shaft 18 extends outside the receptacle 3 to the actuator 2. By use of the actuator 2, the flap 17 may be arranged in an ajar position (indicated by solid line in fig. 2) around which position the flap rotates forth and back to provide an oscillatory movement.

In fig. 2a the extreme positions of the flap 17 is indicated by dotted lines. The amplitude of the angular movement of the shaft 18 to provide the oscillatory movement of the flap 17 is typically in the order of between +/- 1 and 20 degrees and the frequency (defined as the number of cycles per second, where a cycle is the movement from one extreme position to the other and back) is typically between 0.5 and 30 Hz. The actual choice of amplitude and frequency may be different for different materials due to difference in the materials tendency to pack. Any oscillatory movement can be used, such as a sinusoidal, triangular or square.

As shown in fig. 2a, one of the extreme positions of flap 17 is where the flap 17 is perpendicular to the longitudinal direction of the apparatus. The flap 17 is preferably shaped so that when it is in this extreme position a powder seal is provided so that no powder can leave the receptacle 3. It has not been found necessary to shape the flap so that a gas seal is provided although this might be possible if desired. Thereby, the flap 17 may prevent powdered material from flowing into the tapering member 12 during filling of the apparatus.

The actuator 2 is preferably a pneumatic actuator although an electrical actuator or an electro-pneumatic actuator may be used. The actuator 2 is preferably designed so that no hysteresis is introduced in the angular movement.

Upon rotation of the flap 17 out of its perpendicular position openings are provided between the wall of the apparatus and the perimeter of the flap allowing powder to leave the receptacle 3. Upon rotation of the flap 17, powder will be pushed upwards by the half of the flap going upwards and powder on the half of the flap 17 going down will loose its support (or at least the support will be smaller due to the down going movement of the flap 17). The result of this action is that oscillations are imparted to the powder which oscillations prevent or at least minimize packing of the powder due to a loosen-up action.

In addition, the oscillations imparted to the powder may also provide a metering function so that the powder leaves the receptacle 3 in a well defined stream measured in kg/s.

In above disclosure, the feature gas is used. While the invention is not limited to gas (liquid may be used), the present invention is particularly well suited with fluid being in gas phase.

A particular preferred use of the apparatus relates to processing powder for production of a powdered soluble foamer ingredient for producing enhanced foam in foodstuffs and beverages, as disclosed in EP 1 206 193. The ingredient comprises a matrix containing carbohydrate and entrapped gas under pressure. The matrix may also contain proteins. The ingredient is obtained by subjecting porous particles (powdered material) of the matrix to an atmosphere of the gas at a raised pressure and at a temperature above the glass transition temperature of the matrix and subsequently quenching or curing the particles. Accordingly, the invention is useable for transferring powdered material comprising porous particles between zones with different thermo dynamical states, such as different pressure and temperature.

Hence, in an industrial line for producing a powdered soluble foamer ingredient mentioned above, porous particles powder are transferred from a first container to a gassing cell using an apparatus according to the invention for pressurization of the porous particles powder. The container is at atmospheric pressure while the gassing cell is at a raised pressure of about 50 bar. Once gassed, the porous particles are transferred to a quenching cell, still under the same pressure, to obtain a powdered soluble foamer ingredient. After quenching, the foamer ingredient is transferred into a second container, using an apparatus according to the invention for depressurization of the foamer ingredient.

The implementation of such apparatus allows to keep the gassing cell and quenching cell under a raised pressure. This avoids the need to pressurize and depressurize the cells during production of the powdered soluble foamer ingredient.

The apparatus is preferably made from materials being chemical resistant to the fluid and powder passing through the apparatus as well as having mechanical properties allowing pressurization of the apparatus and being resistant to e.g. abrasive actions from the powder. A typical material selected for the apparatus is stainless steel.

The apparatus is preferably made in separate parts which are combined in a releasable manner to form the apparatus. Thereby, the apparatus may be dismantled for service.

The apparatus operates with an absolute difference in pressure between the first pressure P1 and the second pressure P2 of at least 10 bars. Thus, the valves, the material of the apparatus as well as the sealing are selected so as to withstand at least 10 bars in such preferred embodiments.

## Claims

1. An apparatus for transferring a powdered material from a first zone under first pressure P1 to a second zone under second pressure P2, and for pressurizing the powdered material from pressure P1 to pressure P2, the apparatus comprising a receptacle (3) equipped with a powder inlet (5) between the first zone and the receptacle (3), a powder outlet (13) between the receptacle (3) and the second zone, a gas inlet (14, 16) and a gas outlet (14), closure means (5a, 8) adapted to selectively seal the receptacle (3) from first zone, second zone or both zones, during transfer and pressurization of the powdered material, the receptacle (3) is equipped with an oscillator (1) positioned upstream of the powder outlet (13), wherein the oscillator (1) is adapted to be actuated during discharge of the powdered material, and wherein said oscillator (1) thus imparts oscillations to the powdered material during discharge thereof,
**characterised in that** said oscillator (1) comprises a rotatable flap (17) arranged in the receptacle (3) and extending perpendicular to the direction of powder discharge, wherein the rotatable flap is positioned in an ajar position, and wherein the rotatable flap is actuated to oscillate around its ajar position during powder discharge and wherein the apparatus operates with an absolute difference in pressure between the first pressure P1 and the second pressure P2 of at least 10 bar.

2. The apparatus according to claim 1, wherein said rotatable flap is actuated by an actuator (2) without hysteresis and wherein said actuator (2) is a pneumatic actuator.

3. The apparatus according to claims 1 or 2, wherein said oscillator is butterfly valve.

4. The apparatus according to any one of claims 1 to 3, wherein the receptacle is equipped with at least two gas inlets (14, 16), at least one of which is positioned between the oscillator and the powder outlet.

5. The apparatus according to any one of claims 1 to 4, wherein the receptacle is equipped with a filter capable of retaining said powdered material and which delimits within the receptacle:
- a head space which is provided with the gas outlet (14), and
- a working space which is provided with the powder inlet (5) and the powder outlet (13).

6. The apparatus according to claim 5, wherein the head space is provided with a gas inlet (14).

7. The apparatus according to any one of claims 1 to 6, wherein the receptacle is equipped with a plurality of gas inlets connected to a single gas supply (7) through respective gas pipes (15, 16).

8. The apparatus according to claim 7, wherein said gas pipes (15, 16) are arranged in parallel from the gas supply to the gas inlets (14, 16a, 16b).

9. The apparatus according to any of claims 7 or 8, wherein the gas pipes are equipped with closure means (7a, 16a, 16b), preferably being controllable shut-off valves, wherein the closure means (7a, 16a, 16b) of the gas pipes (15, 16) may be controlled for simultaneous opening or closing.

10. The apparatus according to any one of claims 1 to 9, wherein the apparatus comprising a tapering member between the oscillator and the powder outlet (13).

11. The apparatus according to any of the preceding claims, wherein the oscillator (8) is adapted to oscillate with a frequency between 0.5 Hz and 30 Hz.

12. The apparatus according to any of the preceding claims, wherein the oscillator (8) is adapted to oscillate with an amplitude between 1 degrees and 20 degrees.

13. A pressurised apparatus according to any of the preceding claims, wherein the absolute difference in pressure between the first pressure P1 and the second pressure P2, |P2-P1|, is at least 10 bar.

14. A method of transferring a powdered material from a first zone under pressure P1 to a second zone under pressure P2 by use of the apparatus according to any of the claims 1-12, said method comprising:
- filling the apparatus with powdered material from the first zone by feeding powdered material into the receptacle (3) while the powder inlet (5) being open, the powder outlet (13) being closed, the gas outlet (14) being opened and the gas inlet (14, 16) preferably being closed;
- pressurising the apparatus by feeding pressurised gas into the apparatus through one or more gas inlets (14, 16) while the powder inlet (5), the powder outlet (13) and the gas outlet (14) being closed;
- emptying the apparatus by opening the powder outlet (8), activating the oscillator (1) and, preferably, allowing pressurised gas to flow into the apparatus through one or more gas inlets.

## Patentansprüche

1. Vorrichtung zum Übertragen eines pulverförmigen Materials von einer ersten Zone unter einem ersten Druck P1 an eine zweite Zone unter einem zweiten Druck P2, und zum Beaufschlagen des pulverförmigen Materials mit Druck von Druck P1 bis Druck P2, wobei die Vorrichtung Folgendes umfasst: einen Behälter (3), der mit einem Pulvereinlass (5) zwischen der ersten Zone und dem Behälter (3) ausgestattet ist, einen Pulverauslass (13) zwischen dem Behälter (3) und der zweiten Zone, einen Gaseinlass (14, 16) und einen Gasauslass (14), Verschlussmittel (5a, 8), die dafür konzipiert sind, den Behälter (3) während der Übertragung und Druckbeaufschlagung des pulverförmigen Materials selektiv von der ersten Zone, zweiten Zone oder beiden abzuschließen, wobei der Behälter (3) mit einem Oszillator (1) ausgestattet ist, der dem Pulverauslass (13) vorgelagert ist, wobei der Oszillator (1) dafür konzipiert ist, während der Abgabe des pulverförmigen Materials betätigt zu werden, und wobei der Oszillator (1) das pulverförmige Material während dessen Abgabe auf diese Weise in Oszillation versetzt,
**dadurch gekennzeichnet, dass** der Oszillator (1) eine drehbare Klappe (17) umfasst, die in dem Behälter (3) angeordnet ist und sich senkrecht zur Richtung der Pulverabgabe erstreckt, wobei die drehbare Klappe in einer halboffenen Position angeordnet ist, und wobei die drehbare Klappe betätigt wird, um während der Pulverabgabe um ihre halboffene Position herum zu oszillieren, und wobei die Vorrichtung mit einer absoluten Druckdifferenz zwischen dem ersten Druck P1 und dem zweiten Druck P2 von mindestens 10 bar arbeitet.

2. Vorrichtung nach Anspruch 1, wobei die drehbare Klappe durch einen Antrieb (2) ohne Hysterese betätigt wird, und wobei der Antrieb (2) ein Pneumatikantrieb ist.

3. Vorrichtung nach den Ansprüchen 1 oder 2, wobei der Oszillator eine Drosselklappe ist.

4. Vorrichtung nach einem der Ansprüche 1 bis 3, wobei der Behälter mit mindestens zwei Gaseinlässen (14, 16) ausgestattet ist, von denen mindestens einer zwischen dem Oszillator und dem Pulverauslass angeordnet ist.

5. Vorrichtung nach einem der Ansprüche 1 bis 4, wobei der Behälter mit einem Filter ausgestattet ist, der dazu in der Lage ist, das pulverförmige Material zurückzuhalten, und der in dem Behälter Folgendes begrenzt:
- einen Kopfraum, der mit dem Gasauslass (14) bereitgestellt ist, und
- einen Arbeitsraum, der mit dem Pulvereinlass (5) und dem Pulverauslass (13) bereitgestellt ist.

6. Vorrichtung nach Anspruch 5, wobei der Kopfraum mit einem Gaseinlass (14) bereitgestellt ist.

7. Vorrichtung nach einem der Ansprüche 1 bis 6, wobei der Behälter mit einer Vielzahl von Gaseinlässen ausgestattet ist, die durch jeweilige Gasleitungen (15, 16) mit einer einzelnen Gasversorgung (7) verbunden sind.

8. Vorrichtung nach Anspruch 7, wobei die Gasleitungen (15, 16) von der Gasversorgung zu den Gaseinlässen (14, 16a, 16b) parallel angeordnet sind.

9. Vorrichtung nach einem der Ansprüche 7 oder 8, wobei die Gasleitungen mit Verschlussmitteln (7a, 16a, 16b) ausgestattet sind, die vorzugsweise steuerbare Absperrventile sind, wobei die Verschlussmittel (7a, 16a, 16b) der Gasleitungen (15, 16) zum gleichzeitigen Öffnen oder Schließen steuerbar sind.

10. Vorrichtung nach einem der Ansprüche 1 bis 9, wobei die Vorrichtung ein Verjüngungselement zwischen dem Oszillator und dem Pulverauslass (13) umfasst.

11. Vorrichtung nach einem der vorstehenden Ansprüche, wobei der Oszillator (8) konzipiert ist, um mit einer Frequenz zwischen 0,5 Hz und 30 Hz zu oszillieren.

12. Vorrichtung nach einem der vorstehenden Ansprüche, wobei der Oszillator (8) konzipiert ist, um mit einer Amplitude zwischen 1 Grad und 20 Grad zu oszillieren.

13. Druckbeaufschlagte Vorrichtung nach einem der vorstehenden Ansprüche, wobei die absolute Druckdifferenz zwischen dem ersten Druck P1 und dem zweiten Druck P2, |P2-P1|, mindesten10 bar beträgt.

14. Verfahren zum Übertragen eines pulverförmigen Materials aus einer ersten Zone unter Druck P1 an eine zweite Zone unter Druck P2 mithilfe der Vorrichtung nach einem der Ansprüche 1 bis 12, wobei das Verfahren Folgendes umfasst:
- Füllen der Vorrichtung mit pulverförmigem Material aus der ersten Zone durch Zuführen des pulverförmigen Materials in den Behälter (3), während der Pulvereinlass (5) offen ist, der Pulverauslass (13) geschlossen ist, der Gasauslass (14) offen ist und der Gaseinlass (14, 16) vorzugsweise geschlossen ist;
- Beaufschlagen der Vorrichtung mit Druck, indem Druckgas durch einen oder mehrere Gaseinlässe (14, 16) eingeleitet wird, während der Pulvereinlass (5), der Pulverauslass (13) und der Gasauslass (14) geschlossen sind;
- Leeren der Vorrichtung durch Öffnen des Pulverauslasses (8), Aktivieren des Oszillators (1) und vorzugsweise Ermöglichen, dass Druckgas durch einen oder mehrere Gaseinlässe in die Vorrichtung strömt.

## Revendications

1. Appareil destiné à transférer une matière pulvérulente d'une première zone sous une première pression P1 à une deuxième zone sous une deuxième pression P2 et à mettre sous pression la matière pulvérulente de la pression P1 à la pression P2, l'appareil comprenant un réceptacle (3) muni d'un orifice d'entrée de poudre (5) entre la première zone et le réceptacle (3), un orifice de sortie de poudre (13) entre le réceptacle (3) et la deuxième zone, un orifice d'entrée de gaz (14, 16) et un orifice de sortie de gaz (14), des moyens de fermeture (5a, 8) conçus pour sceller de manière sélective le réceptacle (3) à partir de la première zone, de la deuxième zone ou des deux zones pendant le transfert et la mise sous pression de la matière pulvérulente, le réceptacle (3) est équipé d'un oscillateur (1) placé en amont de l'orifice de sortie de poudre (13), dans lequel l'oscillateur (1) est conçu pour être actionné pendant l'évacuation de la matière pulvérulente, et dans lequel ledit oscillateur (1) transmet ainsi des oscillations à la matière pulvérulente pendant l'évacuation de celle-ci,
**caractérisé en ce que** ledit oscillateur (1) comprend un volet rotatif (17) disposé dans le réceptacle (3) et s'étendant perpendiculairement à la direction d'évacuation de la poudre, dans lequel le volet rotatif est positionné dans une position entrouverte, et dans lequel le volet rotatif est actionné pour osciller autour de sa position entrouverte pendant l'évacuation de la poudre et dans lequel l'appareil fonctionne avec une différence absolue de pression d'au moins 10 bar entre la première pression P1 et la deuxième pression P2.

2. Appareil selon la revendication 1, dans lequel ledit volet rotatif est actionné par un actionneur (2) sans hystérésis et dans lequel ledit actionneur (2) est un actionneur pneumatique.

3. Appareil selon les revendications 1 ou 2, dans lequel ledit oscillateur est une vanne papillon.

4. Appareil selon l'une quelconque des revendications 1 à 3, dans lequel le réceptacle est muni d'au moins deux orifices d'entrée de gaz (14, 16), dont au moins un est positionné entre l'oscillateur et l'orifice de sortie de poudre.

5. Appareil selon l'une quelconque des revendications 1 à 4, dans lequel le réceptacle est équipé d'un filtre capable de retenir ladite matière pulvérulente et qui délimite à l'intérieur du réceptacle :
- un espace de tête qui comporte l'orifice de sortie de gaz (14), et
- un espace de travail qui comporte l'orifice d'entrée de poudre (5) et de l'orifice de sortie de poudre (13).

6. Appareil selon la revendication 5, dans lequel l'espace de tête comporte un orifice d'entrée de gaz (14).

7. Appareil selon l'une quelconque des revendications 1 à 6, dans lequel le réceptacle est équipé d'une pluralité d'orifices d'entrée de gaz raccordés à une seule alimentation en gaz (7) par le biais de conduites de gaz respectives (15, 16).

8. Appareil selon la revendication 7, dans lequel lesdites conduites de gaz (15, 16) sont disposées en parallèle entre l'alimentation en gaz et les orifices d'entrée de gaz (14, 16a, 16b).

9. Appareil selon l'une quelconque des revendications 7 ou 8, dans lequel les conduites de gaz sont équipées de moyens de fermeture (7a, 16a, 16b) constitués, de préférence, de vannes d'arrêt pouvant être commandées, dans lequel les moyens de fermeture (7a, 16a, 16b) des conduites de gaz (15, 16) peuvent être commandés pour s'ouvrir ou se fermer simultanément.

10. Appareil selon l'une quelconque des revendications 1 à 9, dans lequel l'appareil comprend un élément conique entre l'oscillateur et l'orifice de sortie de poudre (13).

11. Appareil selon l'une quelconque des revendications précédentes, dans lequel l'oscillateur (8) est conçu pour osciller à une fréquence comprise entre 0,5 Hz et 30 Hz.

12. Appareil selon l'une quelconque des revendications précédentes, dans lequel l'oscillateur (8) est conçu pour osciller avec une amplitude comprise entre 1° et 20°.

13. Appareil sous pression selon l'une quelconque des revendications précédentes, dans lequel la différence absolue de pression |P2-P1| entre la première pression P1 et la deuxième pression P2 est au moins égale à 10 bar.

14. Procédé de transfert d'une matière pulvérulente d'une première zone sous une pression P1 à une deuxième zone sous une pression P2 par utilisation de l'appareil selon l'une quelconque des revendications 1 à 12, ledit procédé comprenant les étapes consistant à :
- remplir l'appareil de matière pulvérulente à partir de la première zone en introduisant la matière pulvérulente dans le réceptacle (3) tandis que l'orifice d'entrée de poudre (5) est ouvert, l'orifice de sortie de poudre (13) est fermé, l'orifice de sortie de gaz (14) est ouvert et l'orifice d'entrée de gaz (14, 16) est, de préférence, fermé ;
- mettre l'appareil sous pression en introduisant du gaz sous pression dans l'appareil par le biais d'un ou plusieurs orifices d'entrée de gaz (14, 16) tandis que l'orifice d'entrée de poudre (5), l'orifice de sortie de poudre (13) et l'orifice de sortie de gaz (14) sont fermés ;
- vider l'appareil en ouvrant l'orifice de sortie de poudre (8), en activant l'oscillateur (1) et, de préférence, en laissant circuler le gaz sous pression dans l'appareil à travers un ou plusieurs orifices d'entrée de gaz.
